# EUROPEAN PATENT APPLICATION

(11) **EP 4 383 897 A1**
(43) Date of publication of application: **12.06.2024**
(21) Application number: 22860456.7
(22) Date of filing: 22.08.2022
(51) Int. Cl.: H04W 72/04

(54) **SIGNAL TRANSMISSION METHOD AND APPARATUS**

(30) Priority: 27.08.2021 CN 202110998362
(71) Applicant: Huawei Technologies Co., Ltd., Shenzhen, Guangdong 518129 (CN)
(72) Inventor: HUA, Meng, Shenzhen, Guangdong 518129 (CN); GUAN, Lei, Shenzhen, Guangdong 518129 (CN); LI, Feng, Shenzhen, Guangdong 518129 (CN); YUAN, Feng, Shenzhen, Guangdong 518129 (CN)
(74) Representative: Pfenning, Meinig & Partner mbB
(86) International application number: PCT/CN2022/114048
(87) International publication number: WO 2023/025110

(57) **Abstract**

This application provides a signal transmission method and an apparatus. In the method, a terminal uses a first analog filter to filter a received first signal or a to-be-sent first signal. A center frequency and/or a passband bandwidth of the first analog filter are/is determined based on M subbands. The M subbands include a first subband and a second subband, the first subband is configured on a first time domain resource for uplink transmission, and the second subband is configured on the first time domain resource for downlink transmission. Based on the foregoing solution, a same design solution is used for a downlink analog filter and an uplink analog filter, so that a design of the filters may be simplified, to reduce implementation complexity of the terminal. When a center frequency of the uplink analog filter is the same as a center frequency of the downlink analog filter, a switch delay, of the terminal, from signal sending to signal reception or from signal reception to signal sending can be reduced.

## Description

### CROSS-REFERENCE TO RELATED APPLICATIONS

This application claims priority to Chinese Patent Application No. 202110998362.4, filed with China National Intellectual Property Administration on August 27, 2021 and entitled "SIGNAL TRANSMISSION METHOD AND APPARATUS", which is incorporated herein by reference in its entirety.

### TECHNICAL FIELD

This application relates to the field of wireless communication technologies, and in particular, to a signal transmission method and an apparatus.

### BACKGROUND

In a new radio (new radio, NR) system, to improve a system capacity and reduce a transmission delay, a dynamic uplink/downlink switching technology is proposed, which is referred to as a new duplex technology. At a specific moment, a base station may receive a signal on a first subband and send a signal on a second subband at the same time. However, the terminal may receive a signal on the second subband or send a signal on the first subband, but does not receive the signal on the second subband and send the signal on the first subband at the same time.

After the new duplex technology is introduced, how the terminal filters a received signal and a to-be-sent signal becomes a problem that needs to be resolved.

### SUMMARY

This application provides a signal transmission method and an apparatus, to reduce a data transmission delay of a terminal.

According to a first aspect, a signal transmission method is provided. The method may be performed by a terminal, or may be performed by a chip applied to a terminal device. In the method, the terminal receives first indication information from a network device, and the first indication information indicates the terminal to receive a first signal or send a first signal on a first time-frequency resource. The terminal receives the first signal and filters the first signal by using a first analog filter, or the terminal filters the first signal by using a first analog filter and sends the first signal. A center frequency and/or a passband bandwidth of the first analog filter is determined based on M subbands, and M is an integer greater than 1. The M subbands include a first subband and a second subband. The first subband is configured on a first time domain resource for uplink transmission. The second subband is configured on the first time domain resource for downlink transmission. The first time domain resource overlaps a time domain resource of the first time-frequency resource.

Based on the foregoing solution, when the terminal receives a signal and sends a signal, a same design solution is used for a downlink analog filter and an uplink analog filter, so that a design of a filter may be simplified, to reduce complexity of the terminal.

In a possible implementation, bandwidths of the M subbands are included in a frequency domain range of one bandwidth part (BWP). Alternatively, bandwidths of the M subbands are included in a frequency domain range of one carrier.

In a possible implementation, the first indication information indicates the terminal to receive the first signal on the first time-frequency resource. The terminal receives second indication information from the network device, and the second indication information indicates the terminal to send a second signal on a second time-frequency resource. A time domain resource of the second time-frequency resource overlaps the first time domain resource, and the time domain resource of the second time-frequency resource does not overlap the time domain resource of the first time-frequency resource. The terminal filters the second signal by using a second analog filter. The center frequency of the first analog filter is the same as a center frequency of the second analog filter.

Based on the foregoing solution, when the terminal receives the signal and sends the signal, a center frequency of the downlink analog filter is the same as a center frequency of the uplink analog filter. This can reduce time of switching between uplink transmission and downlink transmission. In addition, an existing analog filter may also be reused, to reduce complexity of the terminal.

In a possible implementation, the passband bandwidth of the first analog filter is the same as a passband bandwidth of the second analog filter. Alternatively, the center frequency and the passband bandwidth of the first analog filter are determined based on the M subbands, the center frequency of the second analog filter is determined based on the M subbands, and the passband bandwidth of the second analog filter is determined based on K subbands in the M subbands and the center frequency of the second analog filter. The K subbands are configured on the first time domain resource for uplink transmission. Alternatively, the passband bandwidth and the center frequency of the second analog filter are determined based on the M subbands, and the passband bandwidth of the first analog filter is determined based on P subbands in the M subbands and the center frequency of the first analog filter. The P subbands are configured on the first time domain resource for downlink transmission. Alternatively, the center frequency and the passband bandwidth of the second analog filter are determined based on the K subbands in the M subbands, and the K subbands are configured on the first time domain resource for uplink transmission. The center frequency of the first analog filter is determined based on the K subbands, and the passband bandwidth of the first analog filter is determined based on the M subbands and the center frequency of the first analog filter. Alternatively, the center frequency and the passband bandwidth of the first analog filter are determined based on the P subbands in the M subbands, and the P subbands are configured on the first time domain resource for downlink transmission. The center frequency of the second analog filter is determined based on the P subbands, and the passband bandwidth of the second analog filter is determined based on the M subbands and the center frequency of the second analog filter. Alternatively, the center frequency and the passband bandwidth of the second analog filter are determined based on the K subbands in the M subbands, the K subbands are configured on the first time domain resource for uplink transmission, the center frequency of the first analog filter is determined based on the K subbands, the passband bandwidth of the first analog filter is determined based on the P subbands and the center frequency of the first analog filter, and the P subbands are configured on the first time domain resource for downlink transmission. Alternatively, the center frequency and the passband bandwidth of the first analog filter are determined based on the P subbands in the M subbands, the P subbands are configured on the first time domain resource for downlink transmission, the center frequency of the second analog filter is determined based on the P subbands, the passband bandwidth of the second analog filter is determined based on the K subbands and the center frequency of the second analog filter, and the K subbands are configured on the first time domain resource for uplink transmission.

Based on the foregoing solution, the center frequency of the first analog filter is the same as the center frequency of the second analog filter, so that the terminal has short time of switching between signal reception and signal sending, and short time of switching between signal sending and signal reception. In addition, the existing analog filter may be reused. This can reduce complexity and costs of the terminal. If the passband bandwidth of the first analog filter is different from the passband bandwidth of the second analog filter, because the passband bandwidth of the first analog filter or the passband bandwidth of the second analog filter may merely include frequency domain resources occupied by a codirectional-transmission subband, for example, the passband bandwidth of the first analog filter includes frequency domain resources occupied by a subband that is configured for uplink transmission, contradirectional interference may be partially reduced, and transmission performance may be improved.

In a possible implementation, the terminal receives third indication information from the network device, and the third indication information indicates the terminal to receive a third signal or send a third signal on a third time-frequency resource. The terminal receives the third signal and filters the third signal by using a third analog filter, or the terminal filters the third signal by using a third analog filter and sends the third signal. The first subband is configured on a second time domain resource for downlink transmission, and/or the second subband is configured on the second time domain resource for uplink transmission. The second time domain resource overlaps a time domain resource of the third time-frequency resource. The second time domain resource does not overlap the first time domain resource. A center frequency and/or a passband bandwidth of the third analog filter are/is determined based on at least one of the M subbands.

In a possible implementation, when a signal transmission direction of the third signal is the same as a signal transmission direction of the first signal, the third analog filter is the same as the first analog filter; or the center frequency of the first analog filter is the same as the center frequency of the third analog filter; or the passband bandwidth of the first analog filter is the same as the passband bandwidth of the third analog filter; or the center frequency of the first analog filter is the same as the center frequency of the third analog filter, and the passband bandwidth of the first analog filter is the same as the passband bandwidth of the third analog filter.

Based on the foregoing solution, if the third analog filter is the same as the first analog filter, costs and complexity of the terminal may be reduced. If the center frequency of the first analog filter is the same as the center frequency of the third analog filter, there is short time of switching between filtering that is performed on the first signal on the first time domain resource and filtering that is performed on the third signal on the second time domain resource. This improves transmission efficiency. In addition, from the first time domain resource to the second time domain resource, or from the second time domain resource to the next time domain resource, if all terminals receive signals or send signals, the terminals may continuously receive signals or continuously send signals, involving no additional time of switching.

In a possible implementation, the center frequency of the third analog filter is determined based on the M subbands, and the passband bandwidth of the third analog filter is determined based on the M subbands and the center frequency of the third analog filter. The passband bandwidth of the first analog filter is less than or equal to the passband bandwidth of the third analog filter. Alternatively, the center frequency of the first analog filter is determined based on the M subbands, and the passband bandwidth of the first analog filter is determined based on the M subbands and the center frequency of the first analog filter. The passband bandwidth of the first analog filter is greater than or equal to the passband bandwidth of the third analog filter.

Based on the foregoing solution, because the passband bandwidth of the first analog filter or the passband bandwidth of the third analog filter may not include or include fewer frequency domain resources of a subband transmitted in a reverse direction, interference of contradirectional transmission may be reduced.

In a possible implementation, the center frequency of the first analog filter is different from the center frequency of the third analog filter; or the passband bandwidth of the first analog filter is different from the passband bandwidth of the third analog filter; or the center frequency of the first analog filter is different from the center frequency of the third analog filter, and the passband bandwidth of the first analog filter is different from the passband bandwidth of the third analog filter.

In a possible implementation, the first analog filter is symmetrical about the center frequency of the first analog filter, and the third analog filter is symmetrical about the center frequency of the third analog filter.

According to a second aspect, a signal transmission method is provided. The method may be applied to a terminal, or applied to a chip of a terminal. In the method, the terminal receives first configuration information from a network device. The first configuration information indicates N subbands in one carrier, and N is an integer greater than 1. The terminal receives first indication information from the network device, and the first indication information indicates the terminal to receive a first signal or send a first signal on a first time-frequency resource. The terminal determines a fourth time-frequency resource based on the first configuration information, and the fourth time-frequency resource is a part or all of the first time-frequency resource. The terminal receives the first signal from the network device or sends the first signal to the network device on the fourth time-frequency resource.

Based on the foregoing solution, each time a base station schedules the terminal to receive a signal or send a signal, a plurality of codirectional subbands may be scheduled, so that control signaling overheads may be reduced.

In a possible implementation, a first frequency domain resource overlaps both a first subband and a second subband. The first subband and the second subband are two of the N subbands. The first subband is configured on a first time domain resource for uplink transmission. The second subband is configured on the first time domain resource for downlink transmission. The first time domain resource is a time domain resource of the first time-frequency resource. The first frequency domain resource is a frequency domain resource on the first time domain resource.

In a possible implementation, when the first indication information indicates the terminal to receive the first signal on the first time-frequency resource, in the first time domain resource, frequency domain resources of the fourth time-frequency resource does not overlap the first subband; and/or when the first indication information indicates the terminal to send the first signal on the first time-frequency resource, in the first time domain resource, frequency domain resources of the fourth time-frequency resource does not overlap the second subband.

In a possible implementation, the first configuration information includes frequency domain resource information of a BWP, and the frequency domain resource information of the BWP includes frequency domain resource information of each of the N subbands.

In a possible implementation, the first configuration information includes configuration information of an uplink BWP, the configuration information of the uplink BWP includes frequency domain start location information of the first subband and frequency domain start location information of a third subband, and the third subband is one of the N subbands; and/or the first configuration information includes configuration information of a downlink BWP, the configuration information of the downlink BWP includes frequency domain start location information of the second subband and frequency domain start location information of a fourth subband, and the fourth subband is one of the N subbands.

In a possible implementation, there is only one piece of bandwidth information, only one piece of subcarrier spacing information, and only one piece of cyclic prefix type information in the configuration information of the uplink BWP; and/or there is only one piece of bandwidth information, only one piece of subcarrier spacing information, and only one piece of cyclic prefix type information in the configuration information of the downlink BWP.

Based on the foregoing solution, the base station may configure same bandwidth information, same subcarrier spacing information, and same cyclic prefix type information for BWPs that are in one transmission direction. When the terminal receives a signal by using different BWPs, the terminal does not need to reload configuration information of the BWPs. This can reduce a data transmission delay.

In a possible implementation, there is only one piece of data channel configuration information, only one piece of control channel configuration information, and only one piece of semi-persistent scheduling configuration information in the configuration information of the uplink BWP; and/or there is only one piece of data channel configuration information, only one piece of control channel configuration information, and only one piece of semi-persistent scheduling configuration information in the configuration information of the downlink BWP.

Based on the foregoing solution, BWPs that are in a same transmission direction have the same control channel configuration information, the same data channel configuration information, and the same data channel configuration information. When the terminal receives a signal by using different BWPs, the terminal does not need to reload configuration information of the BWPs. This can reduce a data transmission delay.

According to a third aspect, a signal transmission method is provided. The method may be applied to a network device, or applied to a chip of a network device. In the method, the network device sends first configuration information to a terminal. The first configuration information indicates N subbands in one carrier, and N is an integer greater than 1. The network device sends first indication information to the terminal, and the first indication information indicates the terminal to receive a first signal or send a first signal on a first time-frequency resource. The network device receives the first signal from the terminal on a fourth time-frequency resource, or sends the first signal to the terminal on the fourth time-frequency resource. The fourth time-frequency resource is a part or all of the first time-frequency resource.

For beneficial effect that can be brought by this solution and more detailed solution description, refer to related descriptions in the second aspect.

According to a fourth aspect, a signal transmission method is provided. The method may be applied to a terminal, or applied to a chip of a terminal. In the method, the terminal receives first configuration information from a network device. The first configuration information indicates N subbands in one carrier, and N is an integer greater than 1. N subbands include a first subband and a second subband. The first subband is configured on a first time domain resource for uplink transmission. The second subband is configured on the first time domain resource for downlink transmission. The terminal sends first capability information to the network device. The first capability information includes time of switching. The time of switching includes one or more of the following: time of switching from signal sending on the first subband on the first time domain resource to signal reception on the second subband on the first time domain resource, or time of switching from signal reception on the second subband on the first time domain resource to signal sending on the first subband on the first time domain resource.

Based on the foregoing solution, the terminal may report time of switching between different subbands for signal reception and sending, and a base station may perform flexible and efficient scheduling based on the time of switching reported by the terminal.

According to a fifth aspect, a signal transmission method is provided. The method may be applied to a network device, or applied to a chip of a network device. In the method, the network device sends first configuration information to a terminal. The first configuration information indicates N subbands in one carrier, and N is an integer greater than 1. The N subbands include a first subband and a second subband. The first subband is configured on a first time domain resource for uplink transmission. The second subband is configured on the first time domain resource for downlink transmission. The network device receives first capability information from the terminal. The first capability information includes time of switching. The time of switching includes one or more of the following: time of switching from signal sending on the first subband on the first time domain resource to signal reception on the second subband on the first time domain resource, or time of switching from signal reception on the second subband on the first time domain resource to signal sending on the first subband on the first time domain resource.

According to a sixth aspect, a signal transmission method is provided. The method may be applied to a terminal, or applied to a chip of a terminal. In the method, the terminal receives first configuration information from a network device. The first configuration information indicates N subbands in one carrier, and N is an integer greater than 1. N subbands include a first subband and a second subband. The first subband is configured on a first time domain resource for uplink transmission. The second subband is configured on the first time domain resource for downlink transmission. The first subband is configured on a second time domain resource for downlink transmission. The second subband is configured on the second time domain resource for uplink transmission. The terminal reports first capability information. The first capability information includes time of switching. The time of switching includes one or more of the following: time of switching from signal sending on the first subband on the first time domain resource to signal reception on the second subband on the first time domain resource, time of switching from signal reception on the second subband on the first time domain resource to signal sending on the first subband on the first time domain resource, time of switching from signal sending on the first subband on the first time domain resource to signal reception on the first subband on the second time domain resource, time of switching from signal reception on the second subband on the first time domain resource to signal sending on the second subband on the second time domain resource, or time of switching from signal sending on the first subband on the first time domain resource to signal sending on the second subband on the second time domain resource.

Based on the foregoing solution, the terminal may report time of switching between different BWPs, and a base station may perform flexible and efficient scheduling based on the time of switching reported by the terminal.

According to a seventh aspect, a signal transmission method is provided. The method may be applied to a network device, or applied to a chip of a network device. In the method, the network device sends first configuration information to a terminal. The first configuration information indicates N subbands in one carrier, and N is an integer greater than 1. N subbands include a first subband and a second subband. The first subband is configured on a first time domain resource for uplink transmission. The second subband is configured on the first time domain resource for downlink transmission. The first subband is configured on a second time domain resource for downlink transmission. The second subband is configured on the second time domain resource for uplink transmission. The network device receives first capability information from the terminal. The first capability information includes time of switching. The time of switching includes one or more of the following: time of switching from signal sending on the first subband on the first time domain resource to signal reception on the second subband on the first time domain resource, time of switching from signal reception on the second subband on the first time domain resource to signal sending on the first subband on the first time domain resource, time of switching from signal sending on the first subband on the first time domain resource to signal reception on the first subband on the second time domain resource, time of switching from signal reception on the second subband on the first time domain resource to signal sending on the second subband on the second time domain resource, or time of switching from signal sending on the first subband on the first time domain resource to signal sending on the second subband on the second time domain resource.

According to an eighth aspect, a communication apparatus is provided, including a transceiver module and a processing module.

The transceiver module is configured to receive first indication information from a network device. The transceiver module is further configured to receive a first signal, and the processing module is configured to filter the first signal by using a first analog filter. Alternatively, the processing module is configured to filter the first signal by using the first analog filter, and the transceiver module is further configured to send the first signal. For the first analog filter, refer to related descriptions in the first aspect.

In a design, the first indication information indicates a terminal to receive the first signal on a first time-frequency resource. The transceiver module is further configured to receive second indication information from the network device, and the second indication information indicates the terminal to send a second signal on a second time-frequency resource. The processing module is further configured to filter the second signal by using a second analog filter.

In a design, the transceiver module is further configured to receive third indication information from the network device, and the third indication information indicates the terminal to receive a third signal or send a third signal on a third time-frequency resource. The transceiver module is further configured to receive the third signal, and the processing module is configured to filter the third signal by using a third analog filter. Alternatively, the processing module is configured to filter the third signal by using the third analog filter, and the transceiver module is further configured to send the third signal.

For more detailed descriptions of the solution, refer to related descriptions in the first aspect.

According to a ninth aspect, a communication apparatus is provided, including a transceiver module and a processing module. The transceiver module is configured to receive first configuration information and first indication information from a network device. The processing module is configured to determine a fourth time-frequency resource based on the first configuration information and the first indication information. The transceiver module is further configured to receive the first signal from the network device or send the first signal to the network device on the fourth time-frequency resource. For other more detailed descriptions, refer to related descriptions in the second aspect.

According to a tenth aspect, a communication apparatus is provided, including a transceiver module and a processing module. The transceiver module is configured to send first configuration information and first indication information to a terminal. The processing module is configured to determine a fourth time-frequency resource based on the first configuration information and the first indication information. The transceiver module is further configured to receive a first signal from the terminal on the fourth time-frequency resource or send a first signal to the terminal on the fourth time-frequency resource. For other more detailed descriptions, refer to related descriptions in the third aspect.

According to an eleventh aspect, a communication apparatus is provided, including a transceiver module and a processing module.

The transceiver module is configured to receive first configuration information from a network device. The processing module is configured to generate first capability information, and the first capability information includes time of switching. The transceiver module is further configured to send the first capability information to the network device. For other more detailed descriptions, refer to related descriptions in the fourth aspect or the sixth aspect.

According to a twelfth aspect, a communication apparatus is provided, including a transceiver module and a processing module.

The processing module is configured to generate first configuration information. The transceiver module is configured to send first configuration information to a terminal, and further configured to receive first capability information from the terminal. The first capability information includes time of switching. For other more detailed descriptions, refer to related descriptions in the fifth aspect or the seventh aspect.

According to a thirteenth aspect, a communication apparatus is provided, including a processor. The processor is coupled to a memory. The memory is configured to store a computer program or instructions. The processor is configured to execute the computer program or the instructions, to implement the method according to the various possible implementations in the various aspects. The memory may be located inside the apparatus, or may be located outside the apparatus. There may be one or more processors.

According to a fourteenth aspect, this application provides a communication apparatus, including a processor and an interface circuit. The interface circuit is configured to communicate with another apparatus. The processor is configured to perform the method according to the various possible implementations in the various aspects.

According to a fifteenth aspect, a communication apparatus is provided. The apparatus includes a logic circuit and an input/output interface.

In an example, the input/output interface is configured to input first indication information from a network device, and the first indication information indicates a terminal to receive a first signal or send a first signal on a first time-frequency resource. The input/output interface is further configured to input a first signal. The logic circuit is configured to filter the first signal by using a first analog filter. Alternatively, the logic circuit is configured to filter the first signal by using a first analog filter, and the input/output interface is further configured to output the first signal. A center frequency and/or a passband bandwidth of the first analog filter is determined based on M subbands, and M is an integer greater than 1. The M subbands include a first subband and a second subband, the first subband is configured on a first time domain resource for uplink transmission, the second subband is configured on the first time domain resource for downlink transmission, and the first time domain resource overlaps a time domain resource of the first time-frequency resource. For more detailed descriptions of the solution, refer to related descriptions in the first aspect.

In another example, the input/output interface is configured to input first configuration information from the network device. The first configuration information indicates N subbands in one carrier, and N is an integer greater than 1. The input/output interface is further configured to input the first indication information from the network device, and the first indication information indicates the terminal to receive the first signal or send the first signal on the first time-frequency resource. The logic circuit is configured to determine a fourth time-frequency resource based on the first configuration information and the first indication information. The fourth time-frequency resource is a part or all of the first time-frequency resource. The input/output interface is further configured to input the first signal from the network device or output the first signal to the network device on the fourth time-frequency resource. For more detailed descriptions of the solution, refer to related descriptions in the second aspect.

According to a sixteenth aspect, this application provides a communication system, including: a terminal configured to perform the method according to the various possible implementations in the second aspect, and a network device configured to perform the method according to the various possible implementations in the third aspect; or a terminal configured to perform the method according to the various possible implementations in the fourth aspect, and a network device configured to perform the method according to the various possible implementations in the fifth aspect.

According to a seventeenth aspect, this application further provides a chip system, including a processor, configured to perform the method according to the various possible implementations in the various aspects.

According to an eighteenth aspect, this application further provides a computing program product, including computer-executable instructions. When the computer-executable instructions are run on a computer, the method according to the various possible implementations in the various aspects is implemented.

According to a nineteenth aspect, this application further provides a computer-readable storage medium. The computer-readable storage medium stores a computer program or instructions. When the instructions are run on a communication apparatus, the method according to the various possible implementations in the various aspects is implemented.

### BRIEF DESCRIPTION OF DRAWINGS

FIG. 1 is a schematic diagram of a stopband, a passband, and a transition band of an analog filter according to an embodiment of this application;
FIG. 2 is a schematic diagram of a communication system according to an embodiment of this application;
FIG. 3 is an example flowchart of a signal transmission method according to an embodiment of this application;
FIG. 4 is a schematic diagram of a subband in which frequency domain resources are continuous according to an embodiment of this application;
FIG. 5 is a schematic diagram of a subband in which frequency domain resources are discontinuous according to an embodiment of this application;
FIG. 6 shows uplink/downlink configurations of subbands on different time domain resources according to an embodiment of this application;
FIG. 7 is a schematic diagram of a second time domain resource according to an embodiment of this application;
FIG. 8 is a schematic diagram of a second time domain resource according to an embodiment of this application;
FIG. 9 is an example flowchart of a signal transmission method according to an embodiment of this application;
FIG. 10 is a schematic diagram of a center frequency of a first analog filter according to an embodiment of this application;
FIG. 11 is a schematic diagram of a center frequency of a first analog filter and a center frequency of a second analog filter according to an embodiment of this application;
FIG. 12 is a schematic diagram of a center frequency of a first analog filter and a center frequency of a second analog filter according to an embodiment of this application;
FIG. 13 is a schematic diagram of a center frequency of a first analog filter and a center frequency of a second analog filter according to an embodiment of this application;
FIG. 14 is a schematic diagram of a passband bandwidth of a first analog filter and a passband bandwidth of a second analog filter according to an embodiment of this application;
FIG. 15 is a schematic diagram of a passband bandwidth of a first analog filter and a passband bandwidth of a second analog filter according to an embodiment of this application;
FIG. 16 is a schematic diagram of a center frequency of a first analog filter and a center frequency and a passband bandwidth of a second analog filter according to an embodiment of this application;
FIG. 17 is an example flowchart of a signal transmission method according to an embodiment of this application;
FIG. 18 is a schematic diagram of a communication apparatus according to an embodiment of this application;
FIG. 19 is a schematic diagram of a communication apparatus according to an embodiment of this application; and
FIG. 20 is a schematic diagram of a communication apparatus according to an embodiment of this application.

### DESCRIPTION OF EMBODIMENTS

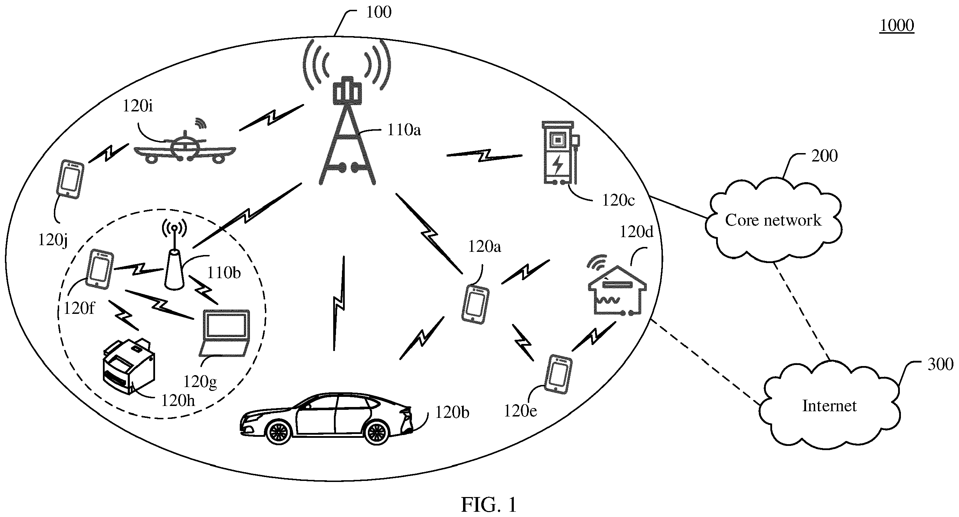

FIG. 1 is a schematic diagram of an architecture of a communication system 1000 to which an embodiment of this application is applied. As shown in FIG. 1, the communication system includes a radio access network 100 and a core network 200. Optionally, the communication system 1000 may further include the Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to a core network in a wireless or wired manner. A core network device and the radio access network device may be independent and different physical devices, or functions of the core network device and logical functions of the radio access network device are integrated into a same physical device, or a part of functions of the core network device and a part of functions of the radio access network device are integrated into one physical device. A terminal is connected to a terminal in a wired or wireless manner, and a radio access network device is connected to a radio access network device in a wired or wireless manner. FIG. 1 is merely a schematic diagram. The communication system may further include another network device. For example, the communication system may further include a wireless relay device and a wireless backhaul device, which are not drawn in FIG. 1.

The radio access network device may also be referred to a network device, may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit, for example, a central unit (central unit, CU) or a distributed unit (distributed unit, DU), that completes a part of functions of a base station. The CU completes functions of a radio resource control protocol and a packet data convergence layer protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete functions of some or all physical layers. For specific descriptions of the foregoing protocol layers, refer to related technical specifications of the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which the base station is the radio access network device.

The terminal may also be referred to as a terminal device, user equipment (user equipment, UE), a mobile station, a mobile terminal, or the like. The terminal device may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an Internet of things (Internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form that are used by the terminal are not limited in embodiments of this application.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

A role of the base station and a role of the terminal may be relative, for example, the helicopter or an unmanned aerial vehicle 120i in FIG. 1 may be configured as a mobile base station, for the terminal 120j accessing the radio access network 100 through 120i, the terminal 120i is a base station. However, for the base station 110a, 120i is a terminal, in other words, communication between 110a and 120i is performed by using a wireless air interface protocol. Certainly, communication may alternatively be performed between 110a and 120i by using an interface protocol between base stations. In this case, in comparison with 110a, 120i is alternatively a base station. Therefore, both the base station and the terminal may be collectively referred to as communication apparatuses, 110a and 110b in FIG. 1 may be referred to as communication apparatuses having a function of the base station, and 120a to 120j in FIG. 1 may be referred to as communication apparatuses having a function of the terminal.

Communication may be performed between a base station and a terminal, between base stations, and between terminals through a licensed spectrum, through an unlicensed spectrum, or through both a licensed spectrum and an unlicensed spectrum. Communication may be performed through a spectrum below 6 gigahertz (gigahertz, GHz), through a spectrum above 6 GHz, or through both a spectrum below 6 GHz and a spectrum above 6 GHz. A spectrum resource for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios such as the smart grid, the industrial control, the smart transportation, and the smart city. A function of the terminal may alternatively be performed by a module (for example, a chip or a modem) in the terminal, or may be performed by an apparatus including the function of the terminal.

In this application, the base station sends a downlink signal or downlink information to the terminal, and the downlink information is carried on a downlink channel. The terminal sends an uplink signal or uplink information to the base station, and the uplink information is carried on an uplink channel. To communicate with the base station, the terminal needs to establish a wireless connection to a cell controlled by the base station. A cell that establishes the wireless connection to the terminal is referred to as a serving cell of the terminal. When the terminal communicates with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, symbols in embodiments of this application are all time domain symbols.

In this application, a signal may include a data channel, a control channel, and a reference signal. Signal transmission may be uplink transmission, that is, the terminal sends the signal to the base station, or may be downlink transmission, that is, the base station sends the signal to the terminal. When transmission is a verb, transmission may be interchanged with send/receive.

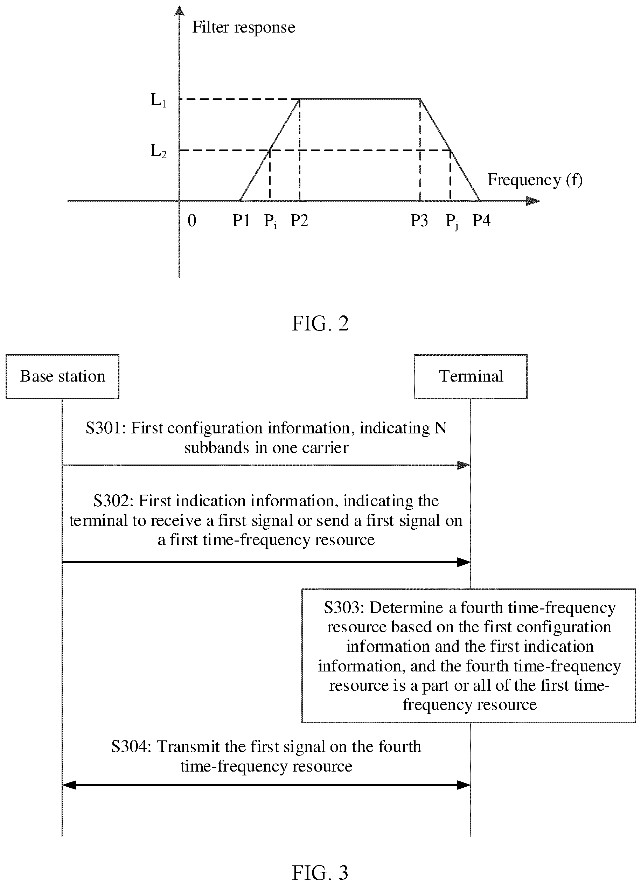

For ease of understanding of the technical solutions provided in embodiments of this application, the following explains and describes technical terms used in embodiments of this application.
(1) Cell: Coverage of each network device may be divided into one or more cells. In a current NR standard, one downlink carrier may be configured for one cell, and optionally, at least one uplink carrier may be configured for one cell. For a terminal device, a cell that provides a service for the terminal device is referred to as a serving cell. The cell in this application may alternatively be the serving cell.
(2) Carrier: A frequency domain resource configured for one cell may be referred to as a carrier. For example, a downlink frequency domain resource configured for one cell may be referred to as a downlink carrier, and a continuous uplink frequency domain resource configured for one cell may be referred to as an uplink carrier.
(3) Bandwidth part (bandwidth part, BWP): A bandwidth part is a segment of continuous frequency domain resources on one carrier. After one BWP is configured and activated, the BWP is referred to as an active BWP. Currently, one terminal can have only one downlink active BWP on one downlink carrier, and can have only one uplink active BWP on one uplink carrier. The terminal sends uplink data and control information in the uplink active BWP, and receives downlink data and control information in the downlink active BWP.
(4) Subband: A subband is a segment of continuous frequency domain resources. In embodiments of this application, the subband may be the segment of continuous frequency domain resources in one BWP. Alternatively, a bandwidth of the subband may alternatively be the same as a bandwidth of the BWP, that is, one subband may alternatively be one BWP.
(5) Passband, transition band, and stopband of a filter: Refer to FIG. 2. A passband, a transition band, and a stopband of a filter are shown. A frequency domain that is less than P1 and greater than P4 may be considered as the stopband of the filter, and a signal in a stopband range cannot pass through the filter, or the filter strongly suppresses a signal in the stopband. A frequency domain that is greater than P1 and less than P2 and that is greater than P3 and less than P4 may be considered as the transition band of the filter, and a signal in the transition band may be attenuated and distorted when the signal passes through the filter. A frequency that is greater than P2 and less than P3 may be considered as the passband of an analog filter, and a signal in a passband range may pass through the filter without attenuation or distortion.
(6) An analog filter: An analog filter is a filter of an analog domain. Switching of the analog filter, for example, switching of a bandwidth or a center frequency, requires specified time of switching. Time of switching of a digital domain filter is short, which may almost be considered as real-time switching.

Embodiments of this application provide a signal transmission method, to reduce a signal transmission delay. FIG. 3 is an example flowchart of a signal transmission method according to an embodiment of this application. A first time domain resource in this embodiment of this application is a time unit in a time domain pattern (pattern) of a subband. The time unit may be one or more subframes, one or more slots, or one or more time domain symbols.

S301: A base station sends first configuration information to a terminal, and correspondingly, the terminal receives the first configuration information from the base station. The first configuration information indicates N subbands in one carrier. N is an integer greater than 1.

In a possible implementation, the first configuration information includes frequency domain resource information of a BWP, and frequency domain resource information of the N subbands. In another possible implementation, the first configuration information includes the frequency domain resource information of the BWP, and the frequency domain resource information of the BWP includes frequency domain resource information of the N subbands. In still another possible implementation, the frequency domain resource information of the BWP and the frequency domain resource information of the N subbands are separately carried in two pieces of signaling. In other words, the first configuration information is carried in first signaling, and the frequency domain resource information of the N subbands is carried in second signaling. In the foregoing three implementations, the N subbands may be N subbands in one BWP. Frequency domain resources of the BWP may include a first subband and a second subband. The first subband and the second subband are two of the N subbands. The first subband is configured on a first time domain resource for uplink transmission. The second subband is configured on the first time domain resource for downlink transmission. The BWP may be an uplink BWP, a downlink BWP, a BWP used for both uplink and downlink, or a BWP in which uplink and downlink are not distinguished.

In this embodiment of this application, the frequency domain resource information may include frequency domain start location information and/or bandwidth information. The frequency domain resource information of the BWP may include one or more pieces of frequency domain start location information, so that each piece of frequency domain start location information may correspond to a frequency domain start location of one subband. For example, if the frequency domain resource information of the BWP includes a frequency domain start location P1, a frequency domain start location P2, and a frequency domain start location P3, the frequency domain start location P1 may correspond to the first subband, the frequency domain start location P2 may correspond to the second subband, and the frequency domain start location P3 may correspond to a third subband.

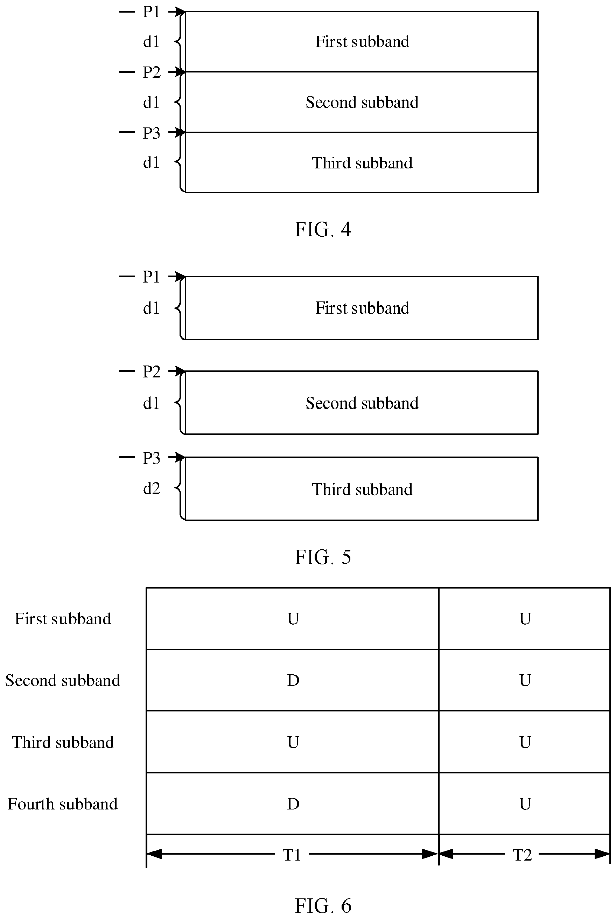

The bandwidth information in the frequency domain resource information of the BWP may be bandwidth information of a subband corresponding to each frequency domain start location in the BWP. In other words, a bandwidth of each subband is the same. In the foregoing example, frequency domain start locations of the first subband, the second subband, and the third subband may be sequentially the frequency domain start location P1, the frequency domain start location P2, and the frequency domain start location P3. Bandwidths of the first subband, the second subband, and the third subband are bandwidths indicated by the bandwidth information. Refer to FIG. 4. The bandwidths of the first subband, the second subband, and the third subband are the same, and are the same as a bandwidth d1 indicated by the bandwidth information.

In another example, a bandwidth indicated by the bandwidth information in the frequency domain resource information of the BWP is greater than or equal to bandwidths of subbands corresponding to frequency domain start locations. For example, the bandwidths of the first subband, the second subband, and the third subband are all less than or equal to the bandwidth indicated by the bandwidth information, and the bandwidths of the first subband, the second subband, and the third subband may be the same or may be different. As shown in FIG. 5, the bandwidth of the first subband is the same as the bandwidth of the second subband, and are both d1, and the bandwidth of the third subband is d2. Both d1 and d2 are less than or equal to a bandwidth d3 indicated by the bandwidth information.

It should be noted that the foregoing frequency domain start locations may correspond to different subbands, and the subbands may be continuous frequency domain resources, as shown in FIG. 4. Alternatively, there may be a spacing between subbands, as shown in FIG. 5. This is not specifically limited in this application. A spacing between two adjacent subbands in a frequency domain may be the same or may be different.

In another possible implementation, the first configuration information may include configuration information of the uplink BWP. The configuration information of the uplink BWP may include frequency domain start location information of the first subband and frequency domain start location information of the third subband. The first subband and the third subband may be two of the N subbands. The configuration information of the uplink BWP may include one piece of bandwidth information, one piece of subcarrier spacing information, and one piece of cyclic prefix type information. In other words, the bandwidth, a subcarrier spacing, and a cyclic prefix type of the first subband are the same as the bandwidth, a subcarrier spacing, and a cyclic prefix type of the third subband.

Based on the foregoing solution, the base station may configure a plurality of BWPs for the terminal, and same subcarrier spacing information and cyclic prefix type information may be configured for a plurality of BWPs that are in a same transmission direction, so that control signaling overheads may be reduced.

Optionally, there may be only one piece of data channel configuration information in the configuration information of the uplink BWP, that is, data channel configuration information of the first subband is the same as data channel configuration information of the third subband. There may alternatively be only one piece of control channel configuration information in the configuration information of the uplink BWP, that is, control channel configuration information of the first subband is the same as control channel configuration information of the third subband. There may alternatively be only one piece of semi-persistent scheduling configuration information in the configuration information of the uplink BWP, that is, semi-persistent scheduling configuration information of the first subband is the same as semi-persistent scheduling configuration information of the third subband.

It should be noted that the first subband and the third subband may be configured for uplink transmission, but periods of time for which the first subband and the third subband are configured for uplink transmission may be the same or may be different.

In a possible implementation, the first configuration information may include configuration information of the downlink BWP. The configuration information of the downlink BWP may include frequency domain start location information of the second subband and frequency domain start location information of the fourth subband. The second subband and the fourth subband may be two of the N subbands. The configuration information of the downlink BWP may include one piece of bandwidth information, one piece of subcarrier spacing information, and one piece of cyclic prefix type information. In other words, the bandwidth, a subcarrier spacing, and a cyclic prefix type of the second subband are the same as the bandwidth, a subcarrier spacing, and a cyclic prefix type of the fourth subband.

Optionally, there may be only one piece of data channel configuration information in the configuration information of the downlink BWP, that is, data channel configuration information of the second subband is the same as data channel configuration information of the fourth subband. There may alternatively be only one piece of control channel configuration information in the configuration information of the downlink BWP, that is, control channel configuration information of the second subband is the same as control channel configuration information of the fourth subband. There may alternatively be only one piece of semi-persistent scheduling configuration information in the configuration information of the downlink BWP, that is, semi-persistent scheduling configuration information of the second subband is the same as semi-persistent scheduling configuration information of the fourth subband.

It should be noted that the second subband and the fourth subband may be configured for downlink transmission, but periods of time for which the second subband and the fourth subband are configured for downlink transmission may be the same or may be different.

In a possible implementation, the first configuration information may include configuration information of a subband. The configuration information of the subband may be the time domain pattern (pattern) of the subband. Each subband corresponds to one time domain pattern, and indicates whether the subband is used for uplink transmission or downlink transmission on one time domain resource.

For two subbands that are in the N subbands and in which frequency domain resources of one subband are adjacent to frequency domain resources of the other subband, for example, the first subband and the second subband, on a same time domain resource, one subband may be configured for uplink transmission, and the other subband may be configured for downlink transmission.

As shown in FIG. 6, on a first time domain resource T1, the first subband and the third subband are configured for uplink transmission, and the second subband and the fourth subband are configured for downlink transmission. On a second time domain resource T2, the first subband, the second subband, the third subband, and the fourth subband are all configured for uplink transmission. It may be understood that FIG. 6 is merely an example. For a specific subband, time domain resources that are used for uplink transmission and time domain resources that are used for downlink transmission are not limited in embodiments of this application. In this embodiment of this application, "D" indicates that a subband is configured for downlink transmission, and "U" indicates that a subband is configured for uplink transmission.

S302: The base station sends first indication information to the terminal, and correspondingly, the terminal receives the first indication information from the base station.

The first indication information indicates the terminal to receive a first signal or send a first signal on a first time-frequency resource. A frequency domain resource of the first time-frequency resource (a first frequency domain resource for short) may overlap both the first subband and the second subband. It is assumed that a time domain resource of the first time-frequency resource overlaps a first time domain resource. For example, on the first time domain resource, the first subband is configured for uplink transmission, and the second subband is configured for downlink transmission, as shown in FIG. 6.

S303: The terminal determines a fourth time-frequency resource based on the first configuration information and the first indication information, and the fourth time-frequency resource is a part or all of the first time-frequency resource.

S304: The terminal receives the first signal or sends the first signal to the base station on the fourth time-frequency resource.

In a possible implementation, the first time-frequency resource indicated by the first indication information may include a part or all of frequency domain resources on the first subband and a part or all of frequency domain resources on the second subband. If the first indication information indicates to receive the first signal on the first time-frequency resource, the terminal may determine, based on the first configuration information, that frequency domain resources of the fourth time-frequency resource does not overlap the first subband on the first time domain resource. If the first indication information indicates to send the first signal on the first time-frequency resource, the terminal may determine, based on the first configuration information, that frequency domain resources of the fourth time-frequency resource does not overlap the second subband on the first time domain resource.

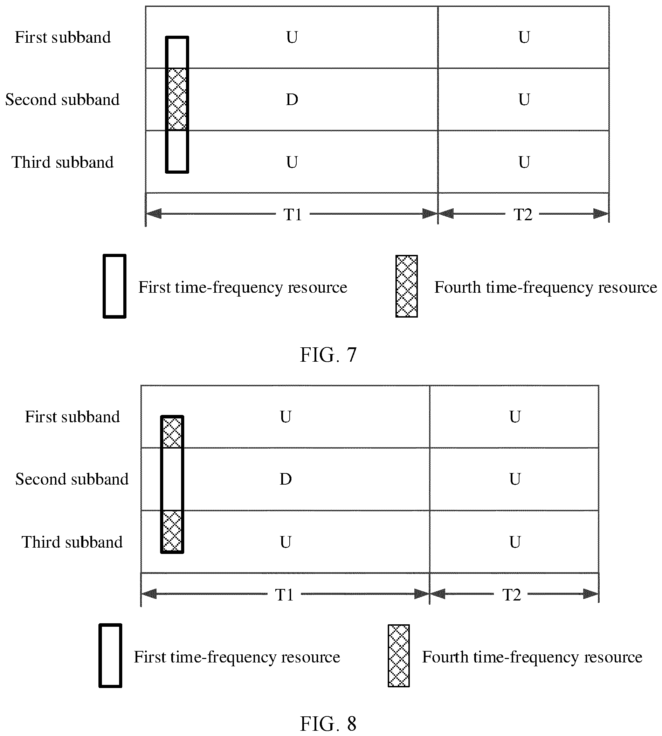

For example, the first configuration information indicates frequency domain resource information of the first subband, the second subband, and the third subband, the first subband and the third subband are configured on T1 for uplink transmission, and the second subband is configured on T1 for downlink transmission. Refer to FIG. 7. If the first indication information indicates the terminal to receive the first signal on the first time-frequency resource, the terminal may receive the first signal on the fourth time-frequency resource. The fourth time-frequency resource is a time-frequency resource that is on the first time-frequency resource and that overlaps the second subband in frequency domain. Refer to FIG. 8. If the first indication information indicates the terminal to send the first signal on the first time-frequency resource, the terminal may send the first signal on the fourth time-frequency resource. The fourth time-frequency resource is a time-frequency resource that is on the first time-frequency resource and that overlaps the first subband in frequency domain, and the fourth time-frequency resource is a time-frequency resource that is on the first time-frequency resource and that overlaps the third subband in frequency domain.

Optionally, if the first indication information indicates the terminal to receive the first signal on the first time-frequency resource, and subbands that overlap the first time-frequency resource are all configured for uplink transmission, the terminal may determine that current scheduling is invalid. In this case, the terminal does not receive the first signal on the first time-frequency resource.

Based on the foregoing solution, each time the base station schedules the terminal to receive a signal or send a signal, a plurality of codirectional subbands may be scheduled. The plurality of codirectional subbands may be continuous in the frequency domain, or may be discontinuous in the frequency domain. Because the plurality of codirectional subbands may be scheduled at a time, the control signaling overheads may be reduced.

In another possible implementation, if the first indication information indicates the terminal to receive the first signal on the first time-frequency resource, and the first frequency domain resource does not overlap a subband that is configured for uplink transmission and that is in a time domain range of the first time-frequency resource, the fourth time-frequency resource is all of the first time-frequency resource. If the first indication information indicates the terminal to send the first signal on the first time-frequency resource, and the first frequency domain resource does not overlap a subband that is configured for downlink transmission and that is in the time domain range of the first time-frequency resource, the fourth time-frequency resource is all of the first time-frequency resource.

In a possible implementation, only one subband is activated on the first time domain resource, that is, the terminal can send a signal or receive a signal on only one subband. As shown in FIG. 8, both the first subband and the third subband are configured for uplink transmission on the first time domain resource. If the first indication information indicates the terminal to send the first signal on the first time-frequency resource, only one subband of the first subband and the third subband is activated. If the first subband is activated, the fourth time-frequency resource is the time-frequency resource that is on the first time-frequency resource and that overlaps the first subband in the frequency domain. It may be understood that, to send or receive the first signal, the base station also needs to determine the fourth time-frequency resource. A method for the base station to determine the fourth time-frequency resource may be similar to a method for the terminal to determine the fourth time-frequency resource. However, the base station may not directly use the first configuration information and the first indication information to determine the fourth time-frequency resource, but may only use the first configuration information and a value of a specific parameter in the first indication information. For simplicity, it may also be briefly described that the base station determines the fourth time-frequency resource based on the first configuration information and the first indication information.

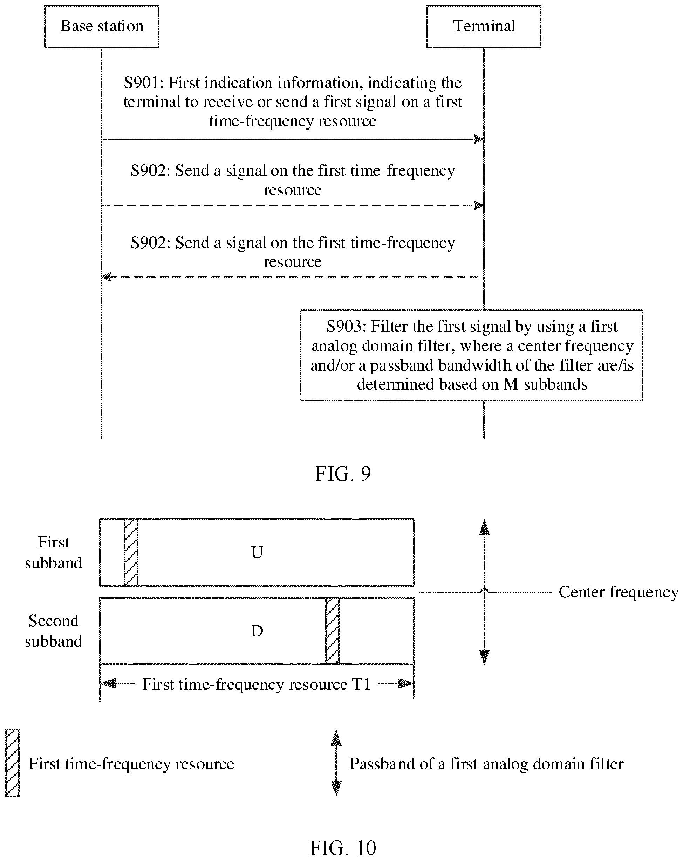

An embodiment of this application further provides another signal transmission method. FIG. 9 is an example flowchart of a signal transmission method according to an embodiment of this application. The method may include the following operations.

S901: A base station sends first indication information to a terminal, and correspondingly, the terminal receives the first indication information from the base station.

The first indication information indicates the terminal to receive a first signal or send a first signal on a first time-frequency resource.

S902: The base station and the terminal transmit the first signal on the first time-frequency resource. Specifically, the base station sends the first signal to the terminal, or the terminal sends the first signal to the base station.

S903: The terminal filters the first signal by using a first analog filter.

If the first indication information indicates the terminal to receive the first signal on the first time-frequency resource, the terminal may receive the first signal from the base station on the first time-frequency resource, and filter the first signal by using the first analog filter.

If the first indication information indicates the terminal to send the first signal on the first time-frequency resource, the terminal may filter the first signal by using the first analog filter, and send the first signal to the base station on the first time-frequency resource.

A center frequency of the first analog filter is determined based on M subbands. A passband bandwidth of the first analog filter may also be determined based on the M subbands. The M subbands may be subbands configured by the base station for the terminal, and M is an integer greater than 1. The M subbands may be included in a frequency domain range of one BWP. For example, the base station may configure one BWP for the terminal, and the BWP may include the M subbands. Alternatively, the M subbands may be included in a frequency domain range of one carrier. For example, the base station may configure a plurality of BWPs for the terminal on one carrier, and one BWP may include one of the M subbands.

It should be noted that the M subbands include a first subband and a second subband. The first subband is configured on a first time domain resource for uplink transmission, and the second subband is configured on the first time domain resource for downlink transmission. The first time domain resource may overlap a time domain resource of the first time-frequency resource.

In a possible implementation, the M subbands may be included in a passband range of the first analog filter. Alternatively, the M subbands may be included in a passband range of the first analog filter and a transition band range of the first analog filter. In other words, the M subbands are not in a stopband range of the first analog filter. Alternatively, a difference between a frequency response of a passband of the first analog filter and a frequency response that is of an edge frequency of the first analog filter and that is in the M subbands or a ratio of a frequency response of a passband of the first analog filter to a frequency response that is of an edge frequency of the first analog filter and that is in the M subbands is less than or equal to a first preset value. Refer to FIG. 2. L₁ is a frequency response of the passband of the first analog filter. Pᵢ and Pⱼ are edge frequencies in the M subbands, where Pᵢ is a minimum frequency of the M subbands, Pⱼ is a maximum frequency of the M subbands, and L₂ is a frequency response of the edge frequency in the M subbands. That is, (|L₁-L₂|) or (L₁:L₂) is less than or equal to a first preset value.

Refer to FIG. 10. It is assumed that M subbands include the foregoing first subband and second subband. A center frequency of a first analog filter is a center of frequency domain resources occupied by the first subband and the second subband. A passband bandwidth of the first analog filter includes the first subband and the second subband. A terminal may receive a first signal on a first time-frequency resource, where the first time-frequency resource overlaps the second subband in a frequency domain (for example, the first time-frequency resource is a time-frequency resource corresponding to a shadow pattern in the second subband in FIG. 10), and filter the first signal by using the first analog filter. Alternatively, the terminal may filter the first signal by using the first analog filter, and send the first signal on the first time-frequency resource. The first time-frequency resource overlaps the first subband in the frequency domain (for example, the first time-frequency resource is a time-frequency resource corresponding to a shadow pattern in the first subband in FIG. 10).

It should be noted that a center frequency of an analog filter in embodiments of this application is a center of frequency domain resources occupied by L subbands. The center may be a center frequency of the frequency domain resources occupied by the L subbands, or may be a frequency, where a deviation between the frequency and the center frequency of the frequency domain resources occupied by the L subbands is within a specific range. L is a positive integer, and the L subbands may be the M subbands, or may be the L of the M subbands. For example, the frequency domain resources occupied by the L subbands are 30 MHz. If the terminal does not have an analog filter with a passband of 30 MHz, the terminal may use an analog filter with a minimum passband bandwidth greater than 30 MHz, for example, an analog filter with a passband bandwidth of 40 MHz. In this case, a difference between the center frequency of the analog filter and the center of the frequency domain resources occupied by the L subbands is less than 5 MHz.

Based on the foregoing solution, when the terminal receives a signal and sends a signal, a center frequency of a downlink analog filter is the same as a center frequency of an uplink analog filter. This can reduce time of switching between uplink transmission and downlink transmission, and reduce complexity of the terminal and costs of the terminal.

When first indication information indicates the terminal to receive the first signal on the first time-frequency resource, a base station may alternatively send second indication information to the terminal. The second indication information indicates the terminal to send a second signal on a second time-frequency resource. The first time-frequency resource does not overlap the second time-frequency resource in a time domain. A time domain resource of the second time-frequency resource overlaps the foregoing first time-frequency resource.

Before the terminal sends the second signal, the terminal filters the second signal by using a second analog filter. A center frequency of the second analog filter may be the same as the center frequency of the first analog filter, so that a switch delay of switching between filtering that is performed by a filter on an uplink signal and filtering that is performed by a filter on a downlink signal is reduced. The following describes in detail a method for determining the center frequency and the passband bandwidth of the first analog filter and the center frequency and a passband bandwidth of the second analog filter.

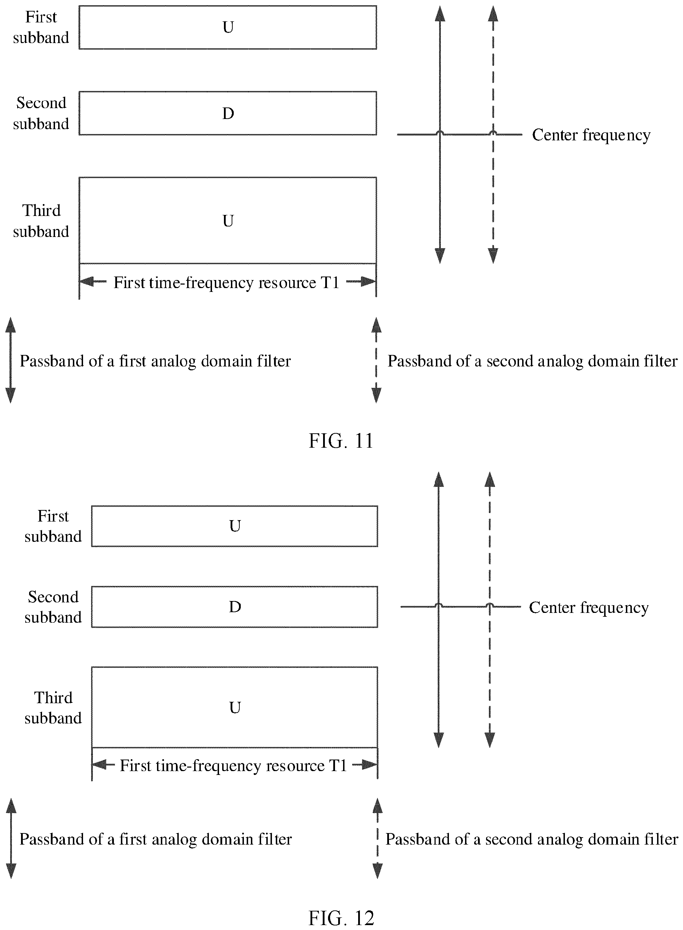

In a possible implementation, the center frequency of the first analog filter and the center frequency of the second analog filter may be centers of frequency domain resources occupied by the M subbands. Refer to FIG. 11. The M subbands may include a first subband, a second subband, and a third subband. The first subband is configured on a first time domain resource for uplink transmission, the second subband is configured on the first time domain resource for downlink transmission, and the third subband is configured on the first time domain resource for uplink transmission. It is assumed that frequency domain resources occupied by the first subband are from f0+25 MHz to f0+30 MHz, frequency domain resources occupied by the second subband are from f0+15 MHz to f0+20 MHz, and frequency domain resources occupied by the third subband are from f0 to f0+10 MHz. Each of a center frequency of a first analog filter and a center frequency of a second analog filter is a center of frequency domain resources occupied by the first subband, the second subband, and the third subband, that is, f0+15 MHz, a center of f0 to f0+30 MHz. f0 is a frequency in a carrier.

In another possible implementation, the center frequency of the first analog filter and the center frequency of the second analog filter may be determined based on P subbands in the M subbands. The P subbands are configured on the first time domain resource for downlink transmission, and P is a positive integer. Each of the center frequency of the first analog filter and the center frequency of the second analog filter may be a center of frequency domain resources occupied by the P subbands. Refer to FIG. 12. Each of a center frequency of a first analog filter and a center frequency of a second analog filter is a center of frequency domain resources occupied by a second subband, that is, f0+17.5 MHz, a center of f0+15 MHz to f0+20 MHz. Definitions of a first subband, the second subband, and a third subband in the figure are the same as definitions of the first subband, the second subband, and the third subband in FIG. 11.

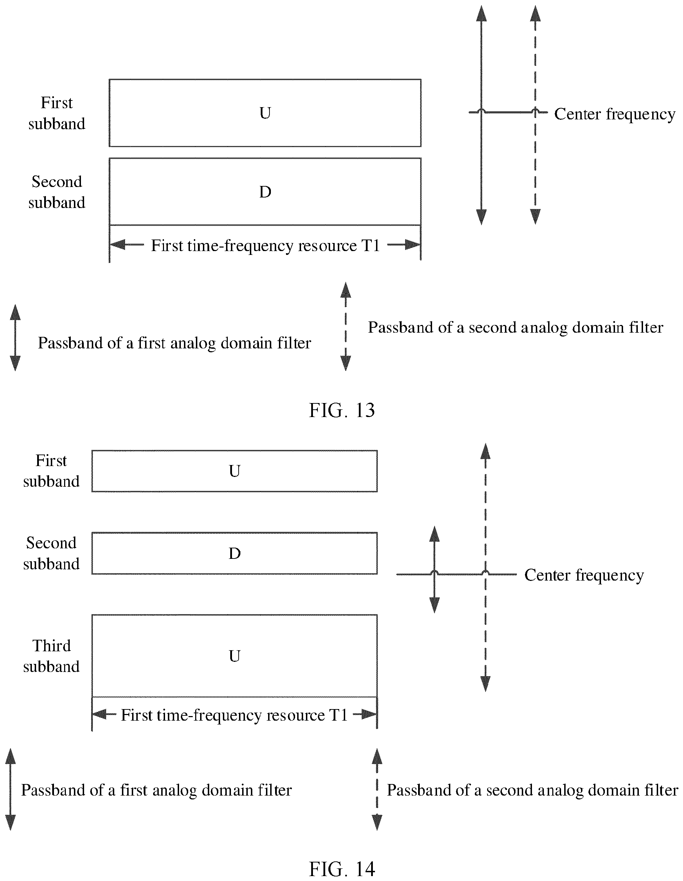

In a possible implementation, the center frequency of the first analog filter and the center frequency of the second analog filter may be determined based on K subbands in M subbands. The K subbands are configured on a first time domain resource for uplink transmission, and K is a positive integer. Each of the center frequency of the first analog filter and the center frequency of the second analog filter may be a center of frequency domain resources occupied by the K subbands. Refer to FIG. 13. M subbands may include a first subband and a second subband. The first subband is configured on a first time domain resource for uplink transmission, and the second subband is configured on the first time domain resource for downlink transmission. It is assumed that frequency domain resources occupied by the first subband are from f0+15 MHz to f0+20 MHz, and frequency domain resources occupied by the second subband are from f0 to f0+10 MHz. Each of a center frequency of a first analog filter and a center frequency of a second analog filter is a center of the frequency domain resources occupied by the first subband, that is, f0+17.5 MHz, a center of f0+15 MHz to f0+20 MHz. f0 is a frequency in a carrier.

It should be noted that a center frequency of the first analog filter and a center frequency of the second analog filter may alternatively be located between center frequencies determined in the foregoing three manners. For example, a center of the frequency domain resources occupied by the M subbands is P1, a center of the frequency domain resources occupied by the P subbands is P2, and a center of the frequency domain resources occupied by the K subbands is P3. In this case, a center frequency of the first analog filter and a center frequency of the second analog filter may be any frequency between P1 and P2, or any frequency from P1 to P3, or any frequency between P2 and P3.

In an example, a passband bandwidth of the first analog filter is the same as a passband bandwidth of the second analog filter. For example, the passband bandwidth of the first analog filter and the passband bandwidth of the second analog filter may include the frequency domain resources occupied by the M subbands and are separately symmetrical about a center frequency, as shown in FIG. 11 to FIG. 13. It should be noted that, in embodiments of this application, unless otherwise specified, a passband bandwidth of a filter is symmetrical about a center frequency of the filter. That the passband bandwidth is symmetrical about the center frequency may be understood as that sizes of passband bandwidths included on two sides of the center frequency are the same.

In another example, a passband bandwidth of the first analog filter is different from a passband bandwidth of the second analog filter. The passband bandwidth of the first analog filter may be determined based on the P subbands and the center frequency of the first analog filter. The passband bandwidth of the first analog filter may include the frequency domain resources occupied by the P subbands. Alternatively, the passband bandwidth of the first analog filter may be determined based on the M subbands. The passband bandwidth of the first analog filter may include the frequency domain resources occupied by the M subbands. In addition, the passband bandwidth of the second analog filter may be determined based on the K subbands and the center frequency of the second analog filter. The passband bandwidth of the second analog filter may include the frequency domain resources occupied by the K subbands. Alternatively, the passband bandwidth of the second analog filter is determined based on the M subbands. The passband bandwidth of the second analog filter may include the frequency domain resources occupied by the M subbands.

The following uses specific embodiments as examples to describe a case in which the passband bandwidth of the first analog filter is different from the passband bandwidth of the second analog filter.

Refer to FIG. 14. Each of a center frequency of a first analog filter and a center frequency of a second analog filter is a center of frequency domain resources occupied by a first subband, a second subband, and a third subband. A passband bandwidth of the first analog filter includes frequency domain resources occupied by the second subband. A passband bandwidth of the second analog filter includes the frequency domain resources occupied by the first subband, the second subband, and the third subband. Definitions of the first subband, the second subband, and the third subband in the figure are the same as definitions of the first subband, the second subband, and the third subband in FIG. 11.

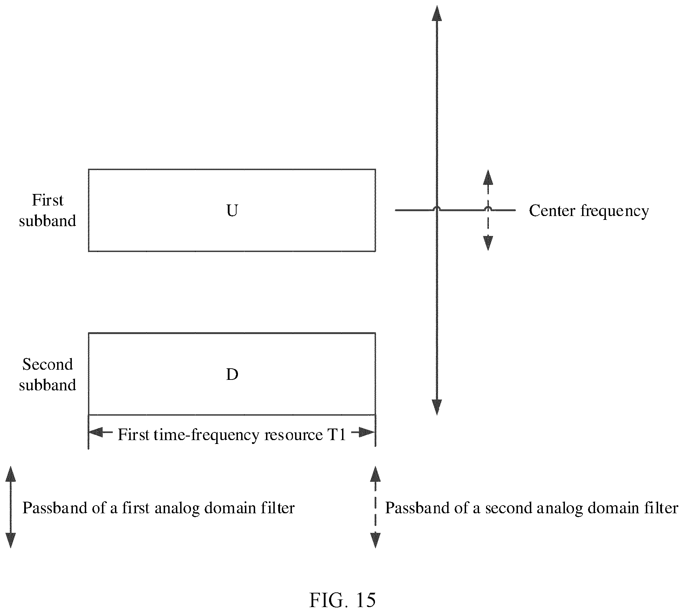

Refer to FIG. 15. It is assumed that M subbands include a first subband and a second subband. The first subband is configured on a first time domain resource for uplink transmission, and the second subband is configured on the first time domain resource for downlink transmission. Each of a center frequency of a first analog filter and a center frequency of a second analog filter may be a center of frequency domain resources occupied by the first subband. A passband bandwidth of the first analog filter includes frequency domain resources occupied by the second subband. A passband bandwidth of the second analog filter may include the frequency domain resources occupied by the first subband.

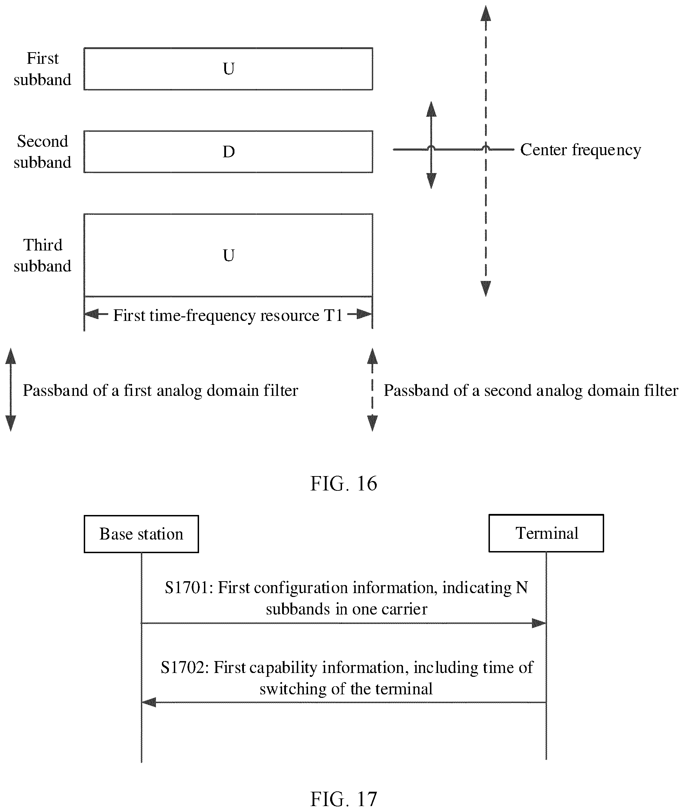

Refer to FIG. 16. Each of a center frequency of a first analog filter and a center frequency of a second analog filter is a center of frequency domain resources occupied by a second subband. A passband bandwidth of the first analog filter includes frequency domain resources occupied by the second subband. A passband bandwidth of the second analog filter includes frequency domain resources occupied by a first subband, the second subband, and a third subband. Definitions of the first subband, the second subband, and the third subband in the figure are the same as definitions of the first subband, the second subband, and the third subband in FIG. 11.

Based on the foregoing solution, the center frequency of the first analog filter is the same as the center frequency of the second analog filter, so that there is a short switch delay of switching between filtering that is performed by a terminal on a received signal and filtering that is performed by the terminal on a sent signal. In addition, an existing analog filter may be reused. This reduces complexity and costs of the terminal. If the passband bandwidth of the first analog filter is different from the passband bandwidth of the second analog filter, because the passband bandwidth of the first analog filter or the passband bandwidth of the second analog filter may include as few as possible, in addition to frequency domain resources occupied by a codirectional-transmission subband, frequency domain resources occupied by a contradirectional-transmission subband, for example, the passband bandwidth of the first analog filter includes as few as possible, in addition to frequency domain resources occupied by a subband that is configured for downlink transmission, frequency domain resources occupied by a subband that is configured for uplink transmission, contradirectional interference may be reduced, and transmission performance may be improved.

In a possible implementation, the terminal may alternatively receive third indication information from a base station. The third indication information indicates the terminal to send a third signal or receive a third signal on a third time-frequency resource. The terminal may filter the third signal by using a third analog filter. A center frequency and/or a passband bandwidth of the third analog filter are/is determined based on at least one of the M subbands. A time domain resource of the third time-frequency resource does not overlap the first time domain resource. The time domain resource of the third time-frequency resource overlaps a second time domain resource. The first subband is configured on the second time domain resource for downlink transmission, or the second subband is configured on the second time domain resource for uplink transmission. The first time domain resource and the second time domain resource may be two adj acent time domain resources, and the first time domain resource may be in front of the second time domain resource.

In an example, when a signal transmission direction of the third signal is the same as a signal transmission direction of the first signal, the third analog filter may be the same as the first analog filter. Alternatively, the center frequency of the third analog filter may be the same as the center frequency of the first analog filter. Alternatively, the center frequency of the third analog filter is the same as the center frequency of the first analog filter, and the passband bandwidth of the third analog filter is the same as the passband bandwidth of the first analog filter. Alternatively, a method for determining the center frequency and the passband bandwidth of the third analog filter is the same as a method for determining the center frequency and the passband bandwidth of the first analog filter.

That the signal transmission direction of the third signal is the same as the signal transmission direction of the first signal may be understood as that both the third signal and the first signal are downlink signals, or both the third signal and the first signal are uplink signals. Specifically, when first indication information indicates the terminal to receive the first signal, and third indication information indicates the terminal to receive the third signal, both the third signal and the first signal are downlink signals. When the first indication information indicates the terminal to send the first signal, and the third indication information indicates the terminal to send the third signal, both the third signal and the first signal are uplink signals.

In another example, the center frequency of the third analog filter may be different from the center frequency of the first analog filter.

Based on the foregoing solution, if the center frequency of the first analog filter is the same as the center frequency of the third analog filter, the terminal may filter the received signal or the sent signal on the first time domain resource and the second time domain resource by using one analog filter. The cost and complexity of the terminal can be reduced. This can reduce the complexity and the costs of the terminal. In addition, from the first time domain resource to the second time domain resource, or from the second time domain resource to the next time domain resource, if all terminals receive signals or send signals, the analog filter of the terminal continuously filters a signal, involving no time of switching. In addition, because the terminal filters the sent signal or the received signal by using one analog filter, there is short time of switching between signal sending and signal reception. This can reduce a data transmission delay. In addition, the existing analog filter may be used. This can reduce the costs of the terminal.

If the center frequency of the first analog filter is the same as the center frequency of the third analog filter, but the passband bandwidth of the first analog filter and the passband bandwidth of the third analog filter are not limited to be the same, each of the passband bandwidth of the first analog filter and the passband bandwidth of the third analog filter may include as few as possible, frequency domain resources of a subband transmitted in a reverse direction, so that interference of contradirectional transmission may be reduced.

If the center frequency of the first analog filter is different from the center frequency of the third analog filter, and the passband bandwidth of the first analog filter is different from the passband bandwidth of the third analog filter, the interference of contradirectional transmission may be further reduced.

In embodiments of this application, the terminal may report capability information of the terminal to the base station, for example, information about time of switching. FIG. 17 is an example flowchart of a method for a terminal to report capability information according to an embodiment of this application. The following operations may be included.

S1701: A base station sends first configuration information to the terminal, and correspondingly, the terminal receives the first configuration information from the base station.

The first configuration information may indicate N subbands in one carrier. N is an integer greater than 1. For detailed descriptions of the first configuration information, refer to related descriptions of the first configuration information in S301.

S1702: The terminal reports first capability information, and correspondingly, the base station receives the first capability information from the terminal.

The first capability information may include time of switching of the terminal.

The time of switching may be one or more of the following:
1. Time of switching from uplink transmission to downlink transmission on a time domain resource (for example, on a first time domain resource or on a second time domain resource).
2. Time of switching from downlink transmission to uplink transmission on a time domain resource.
3. Time of switching from uplink transmission of one subband to uplink transmission of another subband on a time domain resource.
4. Time of switching from downlink transmission of one subband to downlink transmission of another subband on a time domain resource.
5. Time of switching from uplink transmission to downlink transmission between different time domain resources (for example, from a first time domain resource to a second time domain resource).
6. Time of switching from downlink transmission to uplink transmission between different time domain resources.
7. Time of switching from downlink transmission to downlink transmission between different time domain resources.
8. Time of switching from uplink transmission to uplink transmission between different time domain resources.

For time of switching between different time domain resources, switching between same subbands and switching between different subbands may be further distinguished. For uplink-to-uplink switching or downlink-to-downlink switching between different time domain resources, there is time of switching as filter parameters used in two time domain resources may be different.

For example, a value of time of switching may be 0 µs, 20 µs, 35 µs, 140 µs, or 210 µs.

Because a transmission direction configured for a first subband on the first time domain resource and/or on the second time domain resource are/is different from a transmission direction configured for a second subband on the first time domain resource and/or on the second time domain resource, time of switching may alternatively be different. The following describes different cases.

A first case: A first subband is configured on a first time domain resource for uplink transmission, and a second subband is configured on the first time domain resource for downlink transmission.

Time of switching may include one or more of the following:
1. Time of switching, of a terminal, from signal sending on the first subband to signal reception on the second subband on the first time domain resource.
2. Time of switching, of a terminal, from signal reception on the second subband to signal sending on the first subband on the first time domain resource.

A second case: A first subband is configured on a first time domain resource and a second time domain resource for uplink transmission, and a second subband is configured on the first time domain resource for downlink transmission, and is configured on the second time domain resource for uplink transmission.

Time of switching may include one or more of the following:
1. Time of switching, of a terminal, from signal sending on the first subband on the first time domain resource to signal reception on the second subband on the first time domain resource.
2. Time of switching, of a terminal, from signal reception on the second subband on the first time domain resource to signal sending on the first subband on the first time domain resource.
3. Time of switching, of a terminal, from signal sending on the first subband on the first time domain resource to signal sending on the first subband on the second time domain resource.
4. Time of switching, of a terminal, from signal sending on the first subband on the first time domain resource to signal sending on the second subband on the second time domain resource.
5. Time of switching, of a terminal, from signal sending on the first subband on the second time domain resource to signal sending on the second subband on the second time domain resource.

A third case: A first subband is configured on a first time domain resource for uplink transmission, and is configured on a second time domain resource for downlink transmission, and a second subband is configured on both the first time domain resource and the second time domain resource for downlink transmission.

Time of switching may include one or more of the following:
1. Time of switching, of a terminal, from signal sending on the first subband on the first time domain resource to signal reception on the second subband on the first time domain resource.
2. Time of switching, of a terminal, from signal reception on the second subband on the first time domain resource to signal sending on the first subband on the first time domain resource.
3. Time of switching, of a terminal, from signal sending on the first subband on the first time domain resource to signal reception on the second subband on the second time domain resource.
4. Time of switching, of a terminal, from signal reception on the second subband on the first time domain resource to signal reception on the second subband on the second time domain resource.
5. Time of switching, of a terminal, from signal reception on the first subband on the second time domain resource to signal reception on the second subband on the second time domain resource.
6. Time of switching, of a terminal, from signal sending on the first subband on the first time domain resource to signal reception on the first subband on the second time domain resource.

A fourth case: A first subband is configured on a first time domain resource for uplink transmission, and is configured on a second time domain resource for downlink transmission, and a second subband is configured on the first time domain resource for downlink transmission, and is configured on the second time domain resource for uplink transmission.

Time of switching may include one or more of the following:
1. Time of switching, of a terminal, from signal sending on the first subband on the first time domain resource to signal reception on the second subband on the first time domain resource.
2. Time of switching, of a terminal, from signal reception on the second subband on the first time domain resource to signal sending on the first subband on the first time domain resource.
3. Time of switching, of a terminal, from signal sending on the first subband on the first time domain resource to signal reception on the first subband on the second time domain resource.
4. Time of switching, of a terminal, from signal reception on the second subband on the first time domain resource to signal sending on the second subband on the second time domain resource.
5. Time of switching, of a terminal, from signal sending on the first subband on the first time domain resource to signal sending on the second subband on the second time domain resource.
6. Time of switching, of a terminal, from signal reception on the second subband on the first time domain resource to signal reception on the first subband on the second time domain resource.

Based on the foregoing solution, the base station may perform flexible and efficient scheduling based on time of switching reported by the terminal. For example, if a first terminal reports that time of switching from uplink transmission to uplink transmission between different time domain resources is 0, the base station may schedule uplink frequency domain resources on two continuous time domain resources to the first terminal. If a first terminal reports that time of switching from uplink transmission to uplink transmission between different time domain resources is 140 µs, to avoid resource waste, the base station may separately schedule uplink frequency domain resources on two continuous time domain resources to the first terminal and a second terminal, to improve resource usage.

It may be understood that, to implement functions in the foregoing embodiments, the base station and the terminal include corresponding hardware structures and/or software modules for performing the functions. Persons skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

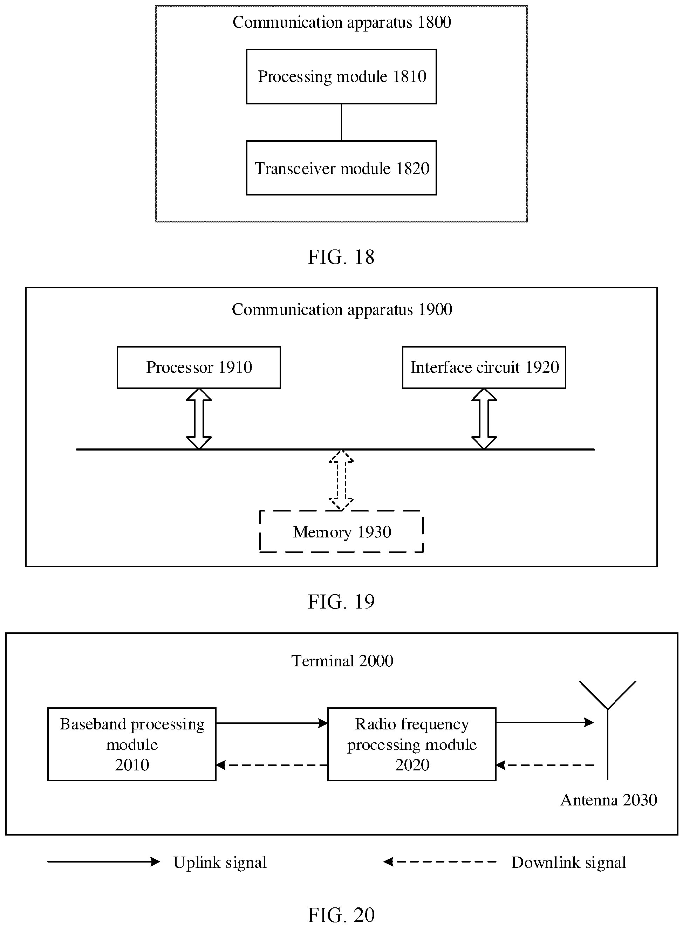

FIG. 18 to FIG. 20 are schematic diagrams of structures of possible communication apparatuses according to an embodiment of this application. These communication apparatuses may be configured to implement functions of a terminal or a base station in the foregoing method embodiments. Therefore, beneficial effect of the foregoing method embodiments can also be implemented. In embodiments of this application, the communication apparatus may be one of terminals 120a to 120j shown in FIG. 1, or may be a base station 110a or 110b shown in FIG. 1, or may be a module (for example, a chip) applied to the terminal device or the base station.

As shown in FIG. 18, a communication apparatus 1800 includes a processing module 1810, and a transceiver module 1820. The communication apparatus 1800 is configured to implement a function of a terminal or a base station in the method embodiment shown in FIG. 3, FIG. 9, or FIG. 17.

When the communication apparatus 1800 is configured to implement the function of the terminal in the method embodiment shown in FIG. 3, the transceiver module 1820 is configured to receive first configuration information and first indication information. The processing module 1810 is configured to determine a fourth time-frequency resource based on the first configuration information and the first indication information. A transceiver module is further configured to receive a first signal or send a first signal on the fourth time-frequency resource.

When the communication apparatus 1800 is configured to implement the function of the base station in the method embodiment shown in FIG. 3, the transceiver module 1820 is configured to send the first configuration information and the first indication information. The processing module 1810 is configured to determine the fourth time-frequency resource based on the first configuration information and the first indication information. The transceiver module is further configured to receive the first signal or send the first signal on the fourth time-frequency resource.

When the communication apparatus 1800 is configured to implement the function of the terminal in the method embodiment shown in FIG. 9, the transceiver module 1820 is configured to receive the first indication information. The processing module 1810 is configured to filter the first signal by using a first analog filter, and the transceiver module 1820 is further configured to send the first signal. Alternatively, the transceiver module 1820 is further configured to receive the first signal, and the processing module 1810 is configured to filter the first signal by using the first analog filter.

When the communication apparatus 1800 is configured to implement the function of the terminal in the method embodiment shown in FIG. 17, the transceiver module 1820 is configured to receive the first configuration information. The processing module 1810 is configured to generate first capability information. The transceiver module 1820 is further configured to send the first capability information.

When the communication apparatus 1800 is configured to implement the function of the base station in the method embodiment shown in FIG. 17, the processing module 1810 is configured to generate the first indication information. The transceiver module 1820 is configured to send the first indication information and receive the first capability information.

For more detailed descriptions about the processing module 1810 and the transceiver module 1820, refer to related descriptions in method embodiments shown in FIG. 3 to FIG. 17.

As shown in FIG. 19, a communication apparatus 1900 includes a processor 1910 and an interface circuit 1920. The processor 1910 and the interface circuit 1920 are coupled to each other. It may be understood that the interface circuit 1920 may be a transceiver or an input/output interface. Optionally, the communication apparatus 1900 may further include a memory 1930, configured to: store instructions executed by the processor 1910, or store input data required by the processor 1910 to run the instructions, or store data generated after the processor 1910 runs the instructions.

When the communication apparatus 1900 is configured to implement a method shown in FIG. 3, FIG. 9, or FIG. 17, the processor 1910 is configured to implement a function of the processing module 1810, and the interface circuit 1920 is configured to implement a function of the transceiver module 1820.

When the communication apparatus is a chip applied to a terminal, the chip in the terminal implements functions of terminals in the foregoing method embodiments. The chip in the terminal receives information from another module (for example, a radio frequency module or an antenna) in the terminal, where the information is sent by a base station to the terminal. Alternatively, the chip in the terminal device sends information to another module (for example, a radio frequency module or an antenna) in the terminal, where the information is sent by the terminal to a base station.

When the communication apparatus is a module used in the base station, the module in the base station implements functions of base stations in the foregoing method embodiments. The module in the base station receives information from another module (for example, a radio frequency module or an antenna) in the base station, where the information is sent by the terminal to the base station. Alternatively, the module in the base station sends information to another module (for example, a radio frequency module or an antenna) in the base station, where the information is sent by the base station to the terminal. The module in the base station may be a baseband chip in the base station, or may be a DU or another module. The DU may be a DU in an open radio access network (open radio access network, O-RAN) architecture.

FIG. 20 is a schematic diagram of a structure of a terminal according to an embodiment of this application. A terminal 2000 includes a baseband processing module 2010, a radio frequency processing module 2020, and an antenna 2030. The baseband processing module 2010 is configured to process a baseband signal, which may specifically include demodulation and decoding of a downlink signal and encoding and modulation of an uplink signal. The baseband processing module 2010 may be specifically a baseband chip. The radio frequency processing module 2020 is configured to process a radio frequency signal, which may specifically include analog filtering that is performed on uplink and downlink signals and power amplification that is performed on uplink and downlink signals. In other words, the radio frequency processing module 2020 includes an analog filter described in the foregoing method embodiment. The radio frequency processing module 2020 may be specifically a radio frequency chip. The antenna 2030 is configured to: receive a radio wave from space, convert the radio wave into a downlink signal, and send the downlink signal to the radio frequency processing module 2020, or convert an uplink signal from the radio frequency processing module 2020 into a radio wave, and transmit the radio wave to space.

It can be understood that, the processor in embodiments of this application may be a central processing unit (Central Processing Unit, CPU), may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. Software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium or write information into the storage medium. Certainly, the storage medium may be a component of the processor. The processor and the storage medium may be located in an ASIC. In addition, the ASIC may be located in the base station or the terminal. Certainly, the processor and the storage medium may exist in the base station or the terminal as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. In this application, "and/or" is an association relationship describing associated objects, and indicates that three relationships may exist. For example, A and/or B may indicate that only A exists, both A and B exist, and only B exists. A and B each may be singular or plural. In the text descriptions of this application, the character "/" generally indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A signal transmission method, applied to a terminal, comprising:
receiving first indication information from a network device, wherein the first indication information indicates the terminal to receive a first signal or send a first signal on a first time-frequency resource; and
receiving the first signal and filtering the first signal by using a first analog filter, or filtering the first signal by using a first analog filter and sending the first signal, wherein
a center frequency and/or a passband bandwidth of the first analog filter is determined based on M subbands, and M is an integer greater than 1; and the M subbands comprise a first subband and a second subband, the first subband is configured on a first time domain resource for uplink transmission, the second subband is configured on the first time domain resource for downlink transmission, and the first time domain resource overlaps a time domain resource of the first time-frequency resource.

2. The method according to claim 1, wherein bandwidths of the M subbands are comprised in a frequency domain range of one bandwidth part BWP, or bandwidths of the M subbands are comprised in a frequency domain range of one carrier.

3. The method according to claim 1 or 2, wherein when the first indication information indicates the terminal to receive the first signal on the first time-frequency resource, the method further comprises:
receiving second indication information from the network device, wherein the second indication information indicates the terminal to send a second signal on a second time-frequency resource, a time domain resource of the second time-frequency resource overlaps the first time domain resource, and the time domain resource of the second time-frequency resource does not overlap the time domain resource of the first time-frequency resource; and
filtering the second signal by using a second analog filter, wherein a center frequency of the second analog filter is the same as the center frequency of the first analog filter.

4. The method according to claim 3, wherein
the passband bandwidth of the first analog filter is the same as a passband bandwidth of the second analog filter; or
the center frequency and the passband bandwidth of the first analog filter are determined based on the M subbands, the center frequency of the second analog filter is determined based on the M subbands, a passband bandwidth of the second analog filter is determined based on K subbands in the M subbands and the center frequency of the second analog filter, and the K subbands are configured on the first time domain resource for uplink transmission; or
a passband bandwidth and the center frequency of the second analog filter are determined based on the M subbands, the passband bandwidth of the first analog filter is determined based on P subbands in the M subbands and the center frequency of the first analog filter, and the P subbands are configured on the first time domain resource for downlink transmission; or
the center frequency and a passband bandwidth of the second analog filter are determined based on K subbands in the M subbands, the K subbands are configured on the first time domain resource for uplink transmission, the center frequency of the first analog filter is determined based on the K subbands, and the passband bandwidth of the first analog filter is determined based on the M subbands and the center frequency of the first analog filter; or
the center frequency and the passband bandwidth of the first analog filter are determined based on P subbands in the M subbands, the P subbands are configured on the first time domain resource for downlink transmission, the center frequency of the second analog filter is determined based on the P subbands, and a passband bandwidth of the second analog filter is determined based on the M subbands and the center frequency of the second analog filter; or
the center frequency and a passband bandwidth of the second analog filter are determined based on K subbands in the M subbands, the K subbands are configured on the first time domain resource for uplink transmission, the center frequency of the first analog filter is determined based on the K subbands, the passband bandwidth of the first analog filter is determined based on P subbands and the center frequency of the first analog filter, and the P subbands are configured on the first time domain resource for downlink transmission; or
the center frequency and the passband bandwidth of the first analog filter are determined based on P subbands in the M subbands, the P subbands are configured on the first time domain resource for downlink transmission, the center frequency of the second analog filter is determined based on the P subbands, a passband bandwidth of the second analog filter is determined based on K subbands and the center frequency of the second analog filter, and the K subbands are configured on the first time domain resource for uplink transmission.

5. The method according to any one of claims 1 to 4, further comprising:
receiving third indication information from the network device, wherein the third indication information indicates the terminal to receive a third signal or send a third signal on a third time-frequency resource; and
receiving the third signal and filtering the third signal by using a third analog filter, or filtering the third signal by using a third analog filter and sending the third signal, wherein
the first subband is configured on a second time domain resource for downlink transmission, and/or the second subband is configured on the second time domain resource for uplink transmission; the second time domain resource overlaps a time domain resource of the third time-frequency resource; the second time domain resource does not overlap the first time domain resource; and a center frequency and/or a passband bandwidth of the third analog filter are/is determined based on at least one of the M subbands.

6. The method according to claim 5, further comprising:
when a signal transmission direction of the third signal is the same as a signal transmission direction of the first signal, the third analog filter is the same as the first analog filter; or
the center frequency of the third analog filter is the same as the center frequency of the first analog filter; or
the center frequency of the third analog filter is the same as the center frequency of the first analog filter, and the passband bandwidth of the third analog filter is the same as the passband bandwidth of the first analog filter.

7. The method according to any one of claims 1 to 6, wherein the first analog filter is symmetrical about the center frequency of the first analog filter.

8. A communication apparatus, comprising a processor, wherein the processor is configured to perform the method according to any one of claims 1 to 7.

9. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 7 through a logic circuit or by executing code instructions.

10. A computer-readable storage medium, wherein the storage medium stores a computer program or instructions, and when the computer program or the instructions is/are executed by a communication apparatus, the method according to any one of claims 1 to 7 is implemented.
